# EUROPÄISCHE PATENTSCHRIFT

(11) **EP 0 999 387 B1**
(45) Veröffentlichungstag und Bekanntmachung des Hinweises auf die Patenterteilung: **10.11.2004**
(21) Anmeldenummer: 99118877.2
(22) Anmeldetag: 24.09.1999
(51) Int. Cl.: F16J 15/08

(54) **Anordnung zur Abdichtung des Brennraums bei Dieselmotoren mit einer Zylinderkopfdichtung**
Sealing arrangment of a combustion chamber in Diesel engines with a cylinder head gasket
Dispositif d'étanchéification d'une chambre de combustion pour moteur Diesel avec un joint de culasse

(30) Priorität: 13.10.1998 DE 19847196
(43) Veröffentlichungstag der Anmeldung: 10.05.2000
(73) Patentinhaber: MAN NUTZFAHRZEUGE AG, 80995 München (DE)
(72) Erfinder: Schibalsky, Walter, 90455 Nürnberg (DE)

(56) Entgegenhaltungen:
- DE-A- 1 907 682
- DE-A- 19 548 574

## Beschreibung

Die Erfindung bezieht sich auf eine Anordnung zur Abdichtung des Brennraumes bei Diesetmotoren mit einer Zylinderkopfdichtung für hohe Spitzendrücke.

Das Hauptproblem der Zylinderkopfdichtung bei Dieselmotoren mit hohen Spitzendrücken besteht in mangelnder Langzeit-Gasdichtheit und im Verzug der Zylinderlaufbüchsen durch die erforderlich werdenden hohen Dichtkräfte, welche vom Zylinderkopf über die Zylinderkopfdichtung direkt in die Zylinderlaufbüchse eingeleitet werden.

Zur Verbesserung der Abdichtung ist es bereits aus der DE 19 07 682 A bekannt, eine Zylinderkopfdichtung vorzusehen, die im wesentlichen aus einer Metallplatte besteht, deren Brennraumrand eine umlaufende Dichtsicke aufweist, wobei der der Dichtsicke in Richtung Brennraum vorgelagerte, umlaufende Rand so vorgeformt ist, dass er im montierten Zustand gegen den Zylinderkopf drückt.

Weiterhin ist es aus der gattungsgemäßen DE 195 48 574 A1 bekannt, bei einer aus einer Metallplatte bestehenden Zylinderkopfdichtung einen konzentrisch um den Brennraum verlaufenden Ring auszubilden, derart, dass der umlaufende Ring in einer zur übrigen Dichtung versetzten Ebene verläuft, wodurch der brennraumseitige Rand im montierten Zustand gegen den Zylinderkopf und die im Übergangsbereich der Ebenen liegenden Oberflächen der Dichtung wechselseitig gegen die Zylinderlaufbüchse und den Zylinderkopf drücken.

Aufgabe der Erfindung ist es daher die Langzeit-Gasdichtheit zu gewährleisten, ohne daß die Zylinderlaufbüchse durch Verzug oder Bewegungen Schaden leidet.

Gelöst wird diese Aufgabe durch die kennzeichnenden Merkmale des Patentanspruches.

Das durchgehende Stahlblech schützt die Sicke vor direkter Hitzeeinwirkung und garantiert dauerhafte Gasdichtheit. Zudem sorgt das bis zur Bohrung reichende Stahlblech für eine Verringerung des Schadraumes und durch Minimierung des Spaltes für eine Vorabdichtung und Abkühlung der Gase. Durch diesen Schutz der Sicke ist es möglich, den Buchsenüberstand zu reduzieren, dadurch verringern sich die Verformung und die Bewegungen, wobei sich die Abdichtwirkung gleichzeitig verbessert.

Ein Ausführungsbeispiel der erfindungsgemäßen Zylinderkopfdichtung ist an Hand von Zeichnungen dargestellt. Es zeigt:
- Fig. 1: eine Zylinderkopfdichtung vor dem Einbau im unverformten Zustand
- Fig. 2: eine Zylinderkopfdichtung im Einbauzustand

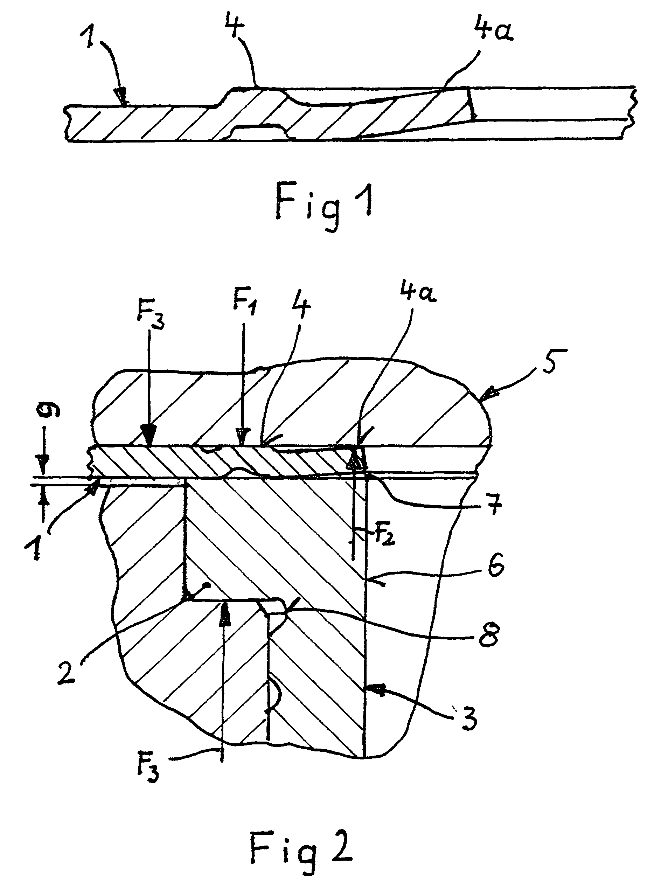

Figur 1 zeigt eine Zylinderkopfdichtung 1 die durchgehend aus Stahlblech ausgebildet ist, mit Ausnahme der üblichen und daher hier nicht dargestellten Durchtritte von Kühlwasser und Schmieröl. Die Zylinderkopfdichtung 1 besteht im wesentlichen aus einer im Bereich eines Bundes 2 der Zylinderlaufbüchse 3 ( Fig. 2 ) angeordneten Sicke 4. Die Vordichtung, also der Schutz vor unmittelbarer thermischer Einwirkung der heißen Brenngase auf die Sicke 4 wird durch den freien, umlaufenden Schenkel 4a erreicht, der sich gegen einen Zylinderkopf 5 preßt wie die Fig. 2 für den eingebauten Zustand zeigt.

Figur 2 zeigt die aus einem durchgehenden Stahlblech bestehende Zylinderkopfdichtung 1 im eingebauten, vorgespannten Zustand. Die im Bereich des Bundes 2 der Zylinderlaufbüchse 3 angeordnete, umlaufende Sicke 4 wird durch die Vorspannkraft der Zylinderkopfschrauben verformt und stellt unter einer Dichtkraft F₁ stehend eine gasdichte Verbindung zwischen Zylinderkopf 5 und Zylinderkopfdichtung 1 einerseits und der Zylinderkopfdichtung 1 und dem Bund 2 der Zylinderlaufbüchse 3 andererseits her.

Im Bereich der Bohrung 6 der Zylinderlaufbüchse 3 ist die Zylinderkopfdichtung 1 zum Zylinderkopf 5 hin mit dem freien, umlaufenden Schenkel 4a versehen und wird somit mit einer Kraft F₂ gegen den Zylinderkopf 5 gepreßt. Dadurch soll vermieden werden, daß der freie Schenkel in Brennraumnähe auf die Laufbuchse drückt, was zu einer zusätzlichen Belastung in der O-Ringnut 8 führen würde.

Die über die Vorspannkraft der Zylinderkopfschrauben eingeleiteten Kräfte F₁ und F₂ werden direkt als Kraft F₃ in den Balkon des Kurbelgehäuses geleitet.

Durch die Vorabdichtung des freien Schenkels 4a ist es möglich, den Buchsenüberstand 9 zu reduzieren, damit reduziert sich auch die Kraft F₃, was wiederum zu einer geringeren Verspannung der Bauteile und damit zu geringeren Verformungen und Bewegungen führt.

Die Sicke 4 ist so abzustimmen, daß sie unter der Krafteinwirkung F₁ nicht völlig plattgedrückt wird, sondern daß ein wenige µm großer Spalt 7 erhalten bleibt.

## Patentansprüche

1. Anordnung zur Abdichtung des Brennraumes bei Dieselmotoren mit hohen Spitzendrücken,wobei die Anordnung eine Zylinderlaufbüchse (3) und eine Zylinderkopfdichtung (1) aufweist, mit einer umlaufenden Sicke (4) und zur Brennraumbohrung (6) hin einem umlaufenden, zum Zylinderkopf (5) hin gewölbten Schenkel vorgesehen istwobei der Schenkel nach anziehen der Zylinderkopfschrauben gegen den Zylinderkopf presst, und wobei die Sicke (4) so angeordnet ist, daß für den umlaufenden Schenkel (4a) eine ausreichende Länge für die Vorabdichtung verbleibt, **dadurch gekennzeichnet, daß** die Zylinderlaufbüchse (3) einen oben liegenden Bund (2) aufweist, der sich an einem Balkon des Kurbelgehäuses abstützt, und dass die umlaufende Sicke (4) im Bereich des Bundes (2) liegend so angeordnet ist, dass die über die Vorspannkraft der Zylinderkopfschrauben eingeleiteten Kräfte (F1, F2) über den Bund direkt in den Balkon des Kurbelgehäuses geleitet werden.

## Claims

1. An arrangement for sealing the combustion chamber in diesel engines with high peak pressures, wherein the arrangement has a cylinder liner (3) and a cylinder head gasket (1), comprising a circumferential bead (4) and, in the direction of the combustion chamber bore (6), a circumferential flank curved towards the cylinder head (5), wherein the flank presses against the cylinder head after the cylinder head bolts have been tightened, and wherein the bead (4) is arranged so that a sufficient length of the circumferential flank (4a) remains for preliminary sealing, **characterised in that** the cylinder liner (3) has an upper collar (2) supported against a balcony of the crankcase, and **in that** the circumferential bead (4) lying in the region of the collar (2) is arranged so that the forces (F1, F2) initiated by the clamping force of the cylinder head bolts are transmitted directly into the balcony of the crankcase by the collar.

## Revendications

1. Dispositif pour assurer l'étanchéité de la chambre de combustion de moteurs Diesel travaillant avec des pressions maximales élevées, ce dispositif comportant une chemise de cylindre (3) et un joint de culasse (1) avec une moulure périphérique (4) et une branche périphérique par rapport à l'alésage (6) de la chambre de combustion, bombé vers la culasse (5),
et après serrage des vis de culasse la branche est pressée contre la culasse et
la moulure (4) est installée pour laisser à la branche périphérique (4a) une longueur suffisante pour l'étanchéité amont,
**caractérisé en ce que**
la chemise de cylindre (3) présente une collerette supérieure (2) qui s'appuie contre le balcon du carter de vilebrequin et la moulure périphérique (4) est située à plat au niveau de la collerette (2) pour que les forces (F1, F2) induites par la force de précontrainte exercée par les vis de culasse soient transmises par la collerette directement dans le balcon du carter de vilebrequin.
